# EUROPEAN PATENT SPECIFICATION

(11) **EP 3 169 459 B1**
(45) Date of publication and mention of the grant of the patent: **30.08.2023**
(21) Application number: 15822878.3
(22) Date of filing: 24.06.2015
(51) Int. Cl.: B09C 1/08

(54) **METHOD AND COMPOSITION FOR INHIBITING METHANOGENESIS DURING IN-SITU SEDIMENT TREATMENT**
VERFAHREN UND ZUSAMMENSETZUNG ZUR HEMMUNG DER METHANOGENESE WÄHREND EINER IN-SITU-SEDIMENTBEHANDLUNG
PROCÉDÉ ET COMPOSITION DESTINÉS À INHIBER LA MÉTHANOGENÈSE PENDANT LE TRAITEMENT IN SITU DE SÉDIMENTS

(30) Priority: 15.07.2014 US 201462024649 P
(43) Date of publication of application: 24.05.2017
(73) Proprietor: Aquablok, Ltd., Toledo, Ohio 43614 (US)
(72) Inventor: HULL, John, H., Ottawa Hills, OH 43606 (US); MUELLER, James, G., Freeport, IL 61032 (US)
(74) Representative: Haseltine Lake Kempner LLP
(86) International application number: PCT/US2015/037389
(87) International publication number: WO 2016/010697

(56) References cited:
- WO-A2-2008/151032
- US-A- 5 538 787
- US-A1- 2002 150 429
- US-A1- 2002 150 429
- US-A1- 2007 203 388
- US-B1- 7 011 766
- US-B2- 7 438 500
- 'Provectus Environmental Products.' TECHNICAL DATA SHEET, PROVECT-IR ANTIMETHANOGENIC ISCR REAGENT 16 June 2014, pages 1 - 5, XP 055387407 Retrieved from the Internet: <URL:http://www.provectusenvironmental.com/ marketing/tech_docs/Provect-1 R_Tech_Sheet_FINAL.p df> [retrieved on 2015-08-24]

## Description

### BACKGROUND OF THE INVENTION

This invention generally relates to materials and methods for environmental remediation, including in particular, methods and compositions for reducing methane production from anaerobic methanogens living within or beneath sedimentation capping systems.

Sediments by their very nature often contain organic carbon materials which are used as growth substrates by methanogens. Methanogens are Archaea or Bacteria that produce methane as a metabolic by-product. The production of methane in the presence of some elements (e.g. heavy metals like mercury) or compound forms of contaminants can result in the production of methylated compounds. These methylated, organo-contaminants can more easily enter the food chain via direct ingestion by macro-invertebrates living in the sediment and by dissolving into pore water of the sediments and diffusing into overlying surface waters where they are introduced to fish by respiratory processes.

Sediment capping remediation systems mitigate the migration of contaminants through sediments where they may negatively impact the quality of water and aquatic life which, in turn, may have significant adverse affects on human health. Through a variety of uptake mechanisms, including respiration by fish, contaminants may enter the base of the food chain, which has many implied ecological receptor and human health risks. Typical contaminants include organic pollutants (e.g., pesticides, insecticides, herbicides, polynuclear aromatic hydrocarbons (PAHs) including chlorinated hydrocarbon compounds such as polychlorinated biphenyl (PCBs, e.g. dioxin), volatile organic compounds (VOCs), organic solvents, and/or nonaqueous phase liquids (NAPL)) and inorganic pollutants (e.g., heavy metals such a mercury and arsenic, ammonia, nitrates, and/or phosphates). The relative mobility and bioavailability of these contaminants can present ecological or human health hazards. One particularly toxic contaminant is methylated mercury, which may be formed when mercury is among the contaminants to be mitigated. See, e.g. Johnson, Nathan, "Mercury Methylation Beneath An In-Situ Sediment Cap", BSE:MSE Univ of Texas 2009 (Thesis Dissertation, accessed 15 July 2014 online at: http://www.caee.utexas.edu/reiblegroup/downloads/dissertation/Nathan_Johnson200 9.pdf); and Johnson et al., Biogeochemical changes and mercury methylation beneath an in-situ sediment cap, Environ Sci. Technol. 2010 Oct 1;44(19):7280-86; both incorporated by reference.

The specific sediment capping strategy that is ultimately deployed depends on many factors. Two generalized approaches are possible: (1) passive capping, which is the deployment of a barrier material that is impermeable to both the water above and the contaminants below; and (2) active/reactive capping, which employs one or more additives or "amendments" to the barrier in an effort to bind up and/or destroy the contaminants. The choice of which approach depends on a wide variety of site-specific issues, demands and conditions.

Currently, at least two main active/reactive sediment capping systems are commercially available for sediment capping remediation: (1) the REACTIVE CORE MAT^{®} sediment capping system commercially sold by CETCO and others; and (2) the AquaBlok^{®}/AquaGate^{™} or Blended Barrier^{™}/AquaGate^{™} (AB/AG or BB/AG) sediment capping systems commercially sold by AquaBlok, Ltd.

The REACTIVE CORE MAT^{®} (RCM) is a generic treatment reagent delivery platform in the form of a permeable composite mat that is primarily composed of at least one reactive filler material sandwiched between two non-woven fabric geotextile materials and typically furnished in standard roll widths of 15 feet. Non-limiting examples of the reactive filler material include granular porous treatment reagents, activated carbon, apatite, organoclay, organoclay montmorillonite, and combinations thereof. An organoclay (OC) treatment reagent is frequently used as the reactive filler material and is reported to be effective at NAPL immobilization and eliminating organic sheens while allowing the passage of water. Non-limiting examples of the geotextile materials include polypropylene (PP), high density polyethylene (HDPE), and combinations or copolymers thereof. An advantage of the RCM is that its porous nature allows for the dissipation of positive pore water pressures associated with upwelling groundwater over its entire surface, unless its ability to transmit water is reduced due to swelling/ingress of NAPL or due to clogging by fines or biofilms. An additional advantage of the RCM is that its thin, lightweight profile minimizes overburden pressures on soft underlying sediments while maximizing the available water column thickness in shallow waters, such as canals. Multiple RCM layers, of the same or different composition, can be positioned at or near the sediment surface to accommodate a variety of contaminant loading scenarios. The RCM may be used in combination with a protecting or "armoring" layer, such as a TRITON^{®} marine mattress.

A TRITON^{®} marine mattress (MM) system is traditionally composed of a planar rock-filled reinforced geogrid material. The TRITON^{®} MM system can be lined with a geotextile fabric material and also filled with at least one reactive filler material. Non-limiting examples of the reactive filler material include granular materials (such as crushed apatite, limestone, slags, and crushed concrete, etc) and/or composite porous treatment reagents, activated carbon, apatite, organoclay, organoclay montmorillonite, and combinations thereof, either in bulk or as amendments to AquaBlok^{®} or Blended Barrier^{™} materials. The TRITON^{®} MM system can be used as a ballast layer and/or an armoring layer for armoring passive or active sediment caps and structures associated therewith. For example, a traditional rock-filled TRITON^{®} MM system may be placed above a RCM, and optionally affixed thereto with fasteners, to serve as an armoring layer for protecting the RCM against damage and erosion.

The second type of active/reactive capping system - AquaBlok^{®}/AquaGate^{™} or Blended Barrier^{™}/AquaGate^{™} (AB/AG or BB/AG) are commercially sold by AquaBlok, Ltd. Briefly, these systems employ a composite particle comprising an aggregate core that is layered with the reactive amendment materials and deployed over the contaminated site. These particles are described in greater detail below.

These sediment capping systems can also help reduce pore water contaminant levels through diffusive mechanisms and, as evidenced by research conducted on low-permeability caps (Gruden, et al, Short-Term Effect of Capping on Microbial Communities in Freshwater Sediments, 2009, Water Environment Research 61:4 pp441-449); the act of creating a physical cap over biologically active sediments can shut down the long-term carbon transport mechanism and subsequent metabolic processes, including methylation.

A resulting complication of existing sediment remediation technologies such as capping or the addition of reactive agents is that the implementation/construction processes themselves typically create an initial spike of methanogenic activity because the sediment becomes disturbed and available carbon sources are more rapidly consumed and/or physico-chemical reactions occur that can release dissolved phase mercury. A second methane spike can occur later as oxygen is depleted from the remediated site, thus shifting the balance between aerobic biodegradation and anaerobic biodegradation in favor of the methanogenic anaerobes. In either case, the production of methane can create gas bubbles (ebullition) which can transport contaminants via surface tension phenomena through localized cap failures due to gas buildup, and sometimes produce a toxic sheen at the water surface.

Moreover, as noted above, stimulation of anaerobic microbial activity can lead to methylation of mercury and other heavy metals, with many negative consequences. Attempts to mitigate mercury methylation include the co-introduction of reactive materials such as ferric sulfides, zero-valent iron, or elemental sulfur to precipitate elemental mercury and make it less available to methylation.

Research has demonstrated that certain statins specifically inhibit the growth and development of Archaea hence minimizing methanogenic activity. For example, statins have been administered to cows in an effort to reduce methane production. Red Yeast Rice (RYR) Extract contains a number of statin compounds, including Monacolin K (also known as Lovastatin), that effectively inhibit methanogens while permitting other biodegradation processes to occur. Provect-CH4^{™} (commercially available from Provectus Environmental Products, Inc. Freeport, IL, USA is a proprietary amendment that includes RYR. However, the delivery of statins to a sediment capping system through a column of water has not been attempted.

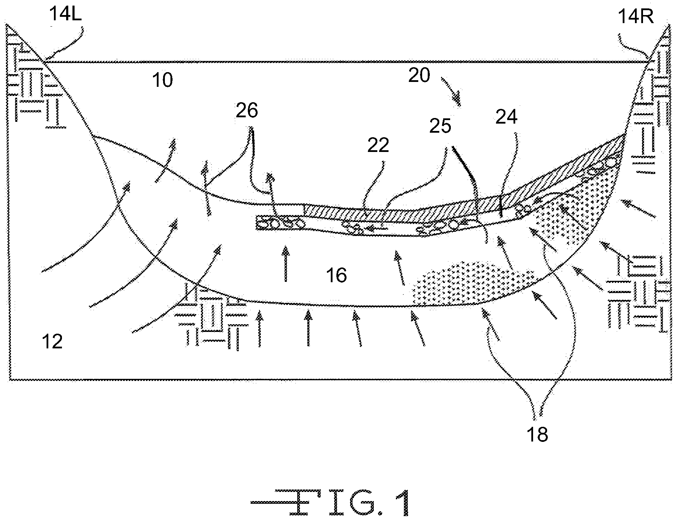

Figure 1 illustrates a body of water 10 supported by ground 12, the ground forming shorelines 14L, 14R at the margins of the body of water 10. A base layer of sediment 16 may collect between the body of water 10 and the ground 12. In situations of contamination, contaminated pore fluids may enter the sediment (shown by plume arrows 18 on the right hand side near the shoreline) and, under upwelling hydrostatic forces, the plume of contamination migrates upward toward the sediment surface. The figure further depicts a "funnel and gate" active sediment capping system 20, having a permeable layer 24 such as AquaGate^{™}, mostly covered by an impermeable layer 22, such as AB, thus comprising an AB/AG capping system. An alternative capping system (not shown) is a Blended Barrier ^{™}/AquaGate^{™} (BB/AG) active/reactive sediment capping system. At some distance from the shoreline 14L (left-hand side), the sediment is no longer impacted by contaminated groundwater and a capping system 20 is no longer required.

The AB/AG and BB/AG systems typically contain at least two different sets of a plurality of composite particles having different properties, each composite particle comprising a core and a sealant layer at least partially encapsulating the core. For example, the AB (passive capping) layer 22 may comprise a set of a plurality of composite particles that form an impermeable barrier, while the AG layer 24 (whether with active treatment or simply drainage blanket) may comprise a different set of a plurality of composite particles that form a permeable and/or filtering layer. See, e.g. U.S. Patent 6,386,796, which issued to Hull on May 14, 2002, U.S. Patent 6,558,081, which issued to Hull on May 6, 2003, U.S. Patent 7,011,766, which issued to Hull on March 14, 2006, and U.S. Patent 7,438,500, which issued to Hull on October 21, 2008. These active (reactive) sediment capping systems are discussed in more detail herein.

US2007/203388 discloses in situ immobilization of metals in contaminated sites using stabilized nanoparticles. US2002/150429 discloses composite particles and methods for their application and implementation. US 5 538 787 discloses a material and a method for forming an underwater barrier layer. US 7 438 500 discloses an erosion resistant barrier with varying permeabilities. US 7 011 766 discloses capping and treating a metal-contaminated sediment. WO 2008/151032 discloses arrays and methods comprising *M. Smithii* gene products. Other U.S. patent publications and applications include:
7,129,388 and 7,531,709 - Method for Accelerated Dechlorination of Matter.
7,828,974 - Method for the Treatment of Groundwater and Soils Using Dried Algae and other Dried Mixtures.
8,147,694 - Method for the Treatment of Groundwater and Soils Using Mixtures of Seaweed and Kelp.
2014/0030797 A1 - Utilization of Ferric Ammonium Citrate for In Situ Remediation of Chlorinated Solvents.
13/785,840 (CIP 14/268,637 PCT/US14/36,632) - Inhibition of Methane Production During Anaerobic Reductive Dechlorination by Restricting the Effectiveness of Enzymes and Coenzymes that Catalyze Methanogenesis.
13/866,158 - Use of Encapsulated Substrate to Control the Release Rates of Organic Hydrogen Donors and Accelerate the Biotic Process of Anaerobic Reductive Dechlorination in Soil and Groundwater.
13/891,934 (CIP 14/268,629 PCT/US14/36,642) - Chemical Oxidation and Biological Attenuation Process for the Contaminated Media.

### SUMMARY OF THE INVENTION

Problem Statement: Sediments by their nature often contain organic carbon materials which are used as growth substrates by Archaea, commonly known as methanogens, which are microorganisms that produce methane as a metabolic by-product. The production of methane in the presence of some elements or compound forms of contaminants can result in the production of methylated compounds. For example, in the presence of mercury and organic matter, methanogens can form methylated mercury, which is a much more mobile and toxic form of the metal contaminant. These organo-contaminants can more easily enter the food chain via direct ingestion by macro-invertebrates living in the sediment and by dissolving into pore water of the sediments and diffusing into overlying surface waters where they are introduced to fish by respiratory processes.

Current Remedial Technologies: Sediment capping technologies using mats, composite-aggregate particles or natural materials, such as sand or topsoil, have been shown to be effective in sequestering contaminated sediments by removing the contaminants from the biologically active zone of macro-invertebrates living at the sediment surface. They can also help reduce pore water contaminant levels through diffusive mechanisms and, as evidenced by research conducted on low-permeability caps (Gruden, et. al), the act of creating a physical cap over biologically active sediments can shut down the long-term carbon transport mechanism and subsequent metabolic processes, including methylation.

Limitation of Current Remedial Technologies: A resulting complication of existing sediment remediation technologies such as cap placement or the addition of reactive agents is that the implementation/construction processes themselves typically create an initial spike of methanogenic activity because available carbon sources are more rapidly consumed and/or physico-chemical reactions occur that can release dissolved phase mercury. The concomitant production of methane can create gas bubbles (ebullition) which can transport contaminants through surface tension phenomena through localized cap failures due to gas buildup. A solution to address the initial methylation spike in conjunction with capping or in situ treatment for long-term control of the generation of methyl mercury would be very advantageous.

Technology Innovative: Attempts to mitigate mercury methylation include the co-introduction of reactive materials such as ferric sulfides, zero-valent iron, or elemental sulfur to precipitate elemental mercury and make it less available to methylation.

Research has demonstrated that Red Yeast Rice (RYR) Extract contains a number of statin compounds, including Monacolin K, that effectively and specifically inhibit the growth and development of Archaea hence minimizing methanogenic activity while permitting other biodegradation processes to occur. Provect-CH4^{™} is a proprietary amendment that includes RYR for controlling methane production during remedial actions (US Patent pending). The incorporation of the Provect-CH4/RYR into a composite aggregate material such as AquaGate^{™} as manufactured by AquaBlok, Ltd. can provide an effective delivery of the antimethanogenic compounds at an effective dosage to significantly inhibit methylation processes within, or under, a sequestration or active treatment cap to address contaminated sediments without creating an initial spike in the methylation process. The statin-amended particles can be applied either as a separate layer prior to the placement on an overlying sequestration layer, or blended into a mixed particle active cap layer. A third alternative would be to manufacture composite aggregate particles with RYR or other statins with other chemical or biological treatment amendments, such as Provect-IR^{™} and other enhanced reductive dehalogenation (ERD) and in situ chemical reduction (ISCR) amendments for combined placement.

### BRIEF DESCRIPTION OF THE DRAWINGS

Figure 1 is a cross-sectional view of an example AquaBlok^{®}/AquaGate^{™} sediment capping system.

### DETAILED DESCRIPTION OF THE INVENTION

As used in this disclosure, certain acronyms and terms have the meanings ascribed below. The term "AB" means AquaBlok^{®}, one example of an impermeable layer of a sediment capping system. The term "AG" means AquaGate^{™}, one example of a permeable layer of a sediment capping system. The term "BB" means Blended Barrier^{™}, which is a blend of an AquaBlok^{®} impermeable barrier and aggregate rock.

The term "RCM" refers to a REACTIVE CORE MAT^{®}, or a structural, hydraulic, and functional equivalent thereof. The term "MM" refers to a TRITON^{®} marine mattress system, or a structural, hydraulic, and functional equivalent thereof.

The term "GG" means a geogrid and the term "NWGT" means a non-woven geotextile, as each of these is further described herein.

The term "GM" means a geomembrane. The term "GCL" means a geosynthetic clay liner. The term "GM-GCL" is understood in the context of this disclosure to mean a geomembrane-supported geosynthetic clay liner.

The term "daylighting" refers to the escape of upwelling groundwater and/or gasses (collectively "pore fluids") to the overlying column or body of water. It will be understood that groundwater may carry with it dissolved contaminants and/or gasses, and is thus a "fluid," and this fluid is filtered through porous media - whether naturally occurring or synthetic - and is thus characterized as a "pore fluid." This is typically in the context of a sediment capping system that includes an impermeable barrier that directs the upwelling pore fluids to a non-contaminated area. Daylighting is depicted in Fig. 1 with arrows 26.

The terms "permeable" and "impermeable" are understood in the context of this disclosure to be with respect to conductivity of fluids; i.e. they refer, respectively, to the properties of materials that permit / block the flow of water, gasses and NAPLs therethrough. Permeability or "hydraulic conductivity" (K) is measured in rates of flow (e.g. cm/sec) as described below.

Where a closed or open-ended numerical range is described herein, all values and subranges within or encompassed by the numerical range are to be considered as being specifically included in and belonging to the original disclosure of the present application as if these values and subranges had been explicitly written out in their entirety. The upper and lower limits of all numerical ranges are deemed to be preceded by the modifier "about."

### Composite particles

The composite particles used in AB, AB/AG, or BB/AG sediment capping systems are known and described in the art along with various specific embodiments and/or sediment capping systems containing the same. See for reference U.S. Patent 5,538,787, which issued to Nachtman et al. on July 23, 1996, U.S. Patent 5,897,946, which issued to Nachtman et al. on April 27, 1999, U.S. Patent 6,386,796, which issued to Hull on May 14, 2002, U.S. Patent 6,558,081, which issued to Hull on May 6, 2003, U.S. Patent 7,011,766, which issued to Hull on March 14, 2006, U.S. Patent 7,438,500, which issued to Hull on October 21, 2008, and WO 2012/048215 published April 12, 2012. The particles may have any desired particle diameter, non-limiting examples of which include composite particles having a particle diameter of less than 3/4 inches (~20 mm), including 1/4-3/4 inches (~5mm to ~20 mm), and 1/4-3/8 inches (~5mm to ~10 mm).

The core of the composite particles may include a granular piece of stone, rock, gravel, sand, or slag, non-limiting examples of which include a granular piece of crushed limestone or other chemically/physically stable earthen aggregate. The core may have any desired particle diameter, a non-limiting example of which includes a particle diameter of 1/4-3/8 inches (~5mm to ~10 mm). The core may be more dense, less dense or equally as dense as the sealant layer. In an exemplary embodiment, the core has a relatively greater density as compared to that of the sealant layer.

The sealant layer of the composite particles may partially or completely encapsulate the core. The sealant layer may include at least one reactive material, non-limiting examples of which include a clay, a water absorbent clay that is readily hydratable and has a high swelling capacity (e.g., a bentonite clay, such as high quality Wyoming-derived sodium bentonite clay containing montmorillonite), an organoclay, a clay mineral (e.g., montmorillonite, illite, kaolinite, and attapulgite), a non-swelling reactive material (e.g., activated carbon), and combinations thereof. The reactive material may be powdered.

The reactive material of the composite particles may comprise activated carbons, or organoclays. Alternatively, the reactive material of the composite particles may comprise one or more proprietary products, non-limiting examples of which include Provect-IRM^{™}, a media treatment reagent available from Provectus Environmental Products, Inc. Freeport, IL, USA, which is an antimethanogenic, metal remediation compound with a controlled-release feature of integrated carbon and zero-valent iron for *in situ* treatment and immobilization of soluble metals in groundwater and saturated soil, and/or MAR Systems' SORBSTER^{®} media treatment reagent, which is a product containing aluminum oxide, silicon dioxide, iron oxide, ferric sulfate and iron sulfide, for removing metal contaminants, such as mercury, from water.

When composite particles having a sealant layer of water absorbent clay are exposed to water, the clay readily hydrates and swells to form a continuous seal or barrier layer having extremely low or no water permeability, which is effective for preventing migration, or avoiding leakage, of sediment, groundwater, gas, and/or contaminants there through. The seal or barrier layer may have any desired thickness, a non-limiting example of which includes a seal or barrier layer having a thickness of about 1 to about 4 inches.

The composite particles may have any desired weight percent ratio of sealant layer to core, based on a total weight of the composite particles, non-limiting examples of which include:

| Sealant layer (wt %) | Core (wt %) |
|---|---|
| 5 | 95 |
| 10 | 90 |
| 15 | 85 |
| 20 | 80 |
| 25 | 75 |
| 30 | 70 |
| 35 | 65 |
| 40 | 60 |
| 45 | 55 |
| 50 | 50 |

The composite particles may have any desired dry bulk density, non-limiting examples of which include a dry bulk density of 70-90 lbs/ft³, (i.e. about 1121 to 1442 kg/m³) including 88-90 lbs/ft³ (i.e. about 1410 to 1442 kg/m³) consolidated, and 83-85 lbs/ft³ (i.e. about 1329 to 1362 kg/m³) unconsolidated. The composite particles may have a specific gravity of greater than 1.0.

The composite particles may, depending on use, have any desired water permeability or hydraulic conductivity, non-limiting examples of which include a water permeability or hydraulic conductivity (K) of 1×10⁻¹ cm/sec or less, including 1×10⁻³ cm/sec or less, 1×10⁻⁴ cm/sec or less, 1×10⁻⁵ cm/sec or less, 1×10⁻⁶ cm/sec or less, 1×10⁻⁷ cm/sec or less, 1×10⁻⁸ cm/sec or less, 1×10⁻⁹ cm/sec, or having a conductivity in the range from 1×10⁻¹ to 1×10⁻⁶ cm/sec, from 1×10⁻² to 1×10⁻⁷ cm/sec, from 1×10⁻³ to 1×10⁻⁵ cm/sec, from 1×10⁻³ to 1×10⁻⁹ cm/sec, from 1×10⁻⁴ to 1×10⁻⁸ cm/sec, from 1×10⁻⁴ to 1×10⁻⁹ cm/sec from 1×10⁻⁵ to 1×10⁻⁹ cm/sec, and from 1×10⁻⁶ to 1×10⁻⁹ cm/sec.

The composite particles may further comprise one or more binders to promote adhesion of the sealant layer to the core. A non-limiting example of the binder includes a cellulosic polymer. The composite particles may further comprise one or more additional layers containing one or more desired materials and having any desired thickness.

The composite particles referenced and described above can of course be custom-formulated to meet unique site-specific demands for a particular project. For example, specific attention to design formulations may be necessary in order to create a long preferential flow path and/or provide sufficient contact and residence times to enable reactions (e.g., sorption, complexation, and/or precipitation) to occur to facilitate the capture and removal of contaminants from pore fluids, particularly when ebullition is the driver. Accordingly, the foregoing discussion regarding the composite particles is for illustrative purposes only and not intended to be limited to the specific aspects exemplified herein, but is to be accorded the broadest reasonable scope consistent with the general principles and features referenced and disclosed herein.

AB and BB composite particles may be characterized by a formulation that emphasizes a high swelling clay reactive material so as to create an extremely low permeability cap or impermeable cap with a hydraulic conductivity (K) of 1×10⁻⁷ cm/sec or less or 1×10⁻⁸ cm/sec or less, including from 1×10⁻⁷ to 1×10⁻⁹ cm/sec.

On the other hand, AG composite particles may be characterized by a formulation that comprises a core containing a granular piece of stone, rock, gravel, sand or slag that can be at least partially encapsulated within a non-swelling reactive material (e.g., powdered activated carbon, (a.k.a. PAC) to produce a porous or permeable treatment material (e.g., a porous or permeable treatment blanket, layer, wall, or similar structure) having a water permeability or hydraulic conductivity (K) of from about 1×10⁻² to about 1×10⁻⁶ cm/s, depending on the particle size of the composite particle and the potential for swelling of the reactive material. Permeable composite particles may have permeabilities in sub-ranges within these permeability limits.

The sealant layer of the AG composite particles may comprise a hydratable and/or swellable reactive material (e.g., water absorbent clay) but only in minor amounts in order to avoid substantial swelling of the sealant layer upon exposure to water or moisture, so as not to interfere with and/or inhibit the flow of contaminated pore fluids therethrough.

For example, the AG composite particle may comprise 20 wt. % or less of a hydratable and/or swellable reactive material (e.g., water absorbent clay), based on a total weight of the AG composite particle, in order to avoid substantial swelling of the sealant layer upon exposure to water or moisture. Non-limiting examples of which include 20 wt. % or less, 19 wt. % or less, 18 wt. % or less, 17 wt. % or less, 16 wt. % or less, 15 wt. % or less, 14 wt. % or less, 13 wt. % or less, 12 wt. % or less, 11 wt. % or less, 10 wt. % or less, 9 wt. % or less, 8 wt. % or less, 7 wt. % or less, 6 wt. % or less, 5 wt. % or less, 4 wt. % or less, 3 wt. % or less, 2 wt. % or less, and 1 wt. % or less, of a hydratable and/or swellable reactive material (e.g., water absorbent clay), based on a total weight of the AG composite particle.

The dense, granular nature of the composite particles enables them to be easily and uniformly deployed and deposited through a water column (via Stoke's law) and onto the sediment surface using conventional materials handling equipment. Since a significant amount of water treatment occurs at or near the surface of the composite particle, inclusion of expensive reactive materials into a central core of the composite particle can be avoided.

AB composite particles may be used alone to form an AB passive impermeable capping layer or blended with other aggregate materials to form a BB capping layer. AG composite particles may be used alone to form an AG active/reactive treatment and permeable drainage blanket layer. AB and AG composite particles may be used together in an active/reactive sediment capping system, which may be arranged in an AB/AG layered "funnel and gate" fashion as shown in Figure 1.

### Methanogen Inhibiting Statin Compositions

Applicants have found that statins, and blends or extracts containing statins, can be incorporated as amendments into reactive sediment capping systems to inhibit methane production by methanogens. Methanogens constitute 5 orders belonging to the domain Archaea, and their taxonomy and mechanisms of methane production are discussed in the literature. See, for example, Bapteste, et al, Archaea 1, pp353-363, 2005, Higher-level classification of the Archaea: evolution of methanogenesis and methanogens*;* and Antony, et al., Molecular diversity of methanogens and identification of Methanolobus sp. as active methylotrophic Archaea in Lonar crater lake sediments, FEMS Microbiol Ecol. 81 (2012) 43-51. In addition, some methanogens are phylogenetically Bacteria rather than Archaea.

Methanogens all convert a methyl group to methane, but pathways and enzymes differ in the source of that methyl group. Some methanogens are also methyltrophic, meaning they utilize as a food source certain one-carbon compounds, such as carbon dioxide (CO₂) or methanol (CH₃OH). In one embodiment, the invention seeks to inhibit methylotrophic methanogens in particular. Some species are capable of reducing carbon dioxide (CO₂) to a methyl group with either a molecular hydrogen (H₂) or formate as the reductant, and these use characteristic enzymes, coenzymes, and reaction patheways. An exemplary pathway utilizes a series of reductive steps (Ferry, 1992): (1) carbon dioxide is reduced to a formyl group, which is (2) transferred to tetrahydromethanopterin and further reduced to a formaldehyde CH₂(=O), which is (3) cyclized to a methenyl group and further reduced to the methyl level -CH₃; and (4) finally the methyl group is transferred to coenzymeM (CoM) and reduced and cleaved to methane.

Additionally, an enzyme known as 4-(β-D-ribofuranosyl)aminobenzene-5'-phosphate (β-RFA-P) synthase, is important for the synthesis of methanopterin, which is reduced to tetrahydromethanopterin for use in the first step of the methanogenisis. This is an important one-carbon carrier in methanogens, replacing the more familiar tetrahydrofuran of higher organisms. Furthermore, an enzyme known as 3-hydroxy-3-ethylglutaryl coenzyme A (HMG-CoA) reductase is used in the production of cell membranes in Archaea methanogens.

In some embodiments therefore, the method involves inhibition of key enzymes used by methanogens, including enzymes such as Coenzyme M and 4-(β-D-ribofuranosyl)aminobenzene-5 '-phosphate (β-RFA-P) synthase used in the production of methane, and enzymes such as 3-hydroxy-3-ethylglutaryl coenzyme A (HMG-CoA) reductase used by methanogens for other purposes, such as cell membrane synthesis.

In some embodiments, extracts of red yeast rice (RYR) may be used. Red yeast rice (RYR) is made from a yeast (Monascus purpureus) grown on rice. It is a dietary staple in some Asian countries. Processed red yeast rice supplements include red yeast rice extract (RYRE), which is any extract of red yeast rice, and Xuezhikang, an alcohol extract of red yeast rice. RYR contains several compounds known as monacolins, which also block the production of cholesterol. One of these, monacolin K, has the same structure as the drugs Lovastatin and Mevinolin.

Although statin-containing extracts have the advantage of being less expensive than pharmaceutical statins, other potentially useful statins include: Atorvastatin, Cerivastatin, Fluvastatin, Lovastatin, Pitavastatin, Pravastatin, Rosuvastatin, and Simvastatin.

The statins or extract may be incorporated into the same particles as a reactive material, or the reactive material may be incorporated into one type of particle, while the statins are incorporated into a second type of particle. If desired, nutrients such as oxygen and carbon, and/or micronutrients such as vitamins, cofactors, etc, or buffers or other adjunctive materials may be incorporated into the composite particles, either with the stains or in auxiliary particles.

In two particle-type systems, the placement of a targeted layer of appropriately blended materials through a water column to provide a combination interim sorption active cap layer is achieved by balancing relative particle size and density using Stokes Law. In some cases it may be desirable to deposit reactive material simultaneously with statins; and in other cases it may be desirable to deposit statins in advance of the reactive material. Other permutations and order combinations are possible, depending on the particular deployments situation and contaminants.

### Selected Applications and Uses

Fig. 1 is a cross-sectional view of an AB/AG sediment capping system in accordance with the invention. As is typical, the contaminated area shown is an aquatic sediment, over which is found a column of water. The upper or overlying AquaBlok^{®} (AB) layer 22 serves as a passive impermeable cap, while the lower or underlying layer 24 (AquaGate^{™} or AG) may serve as an active/reactive treatment and permeable drainage blanket, enabling a directional horizontal flow (arrows 25) of pore fluids (e.g. gas/water/NAPL).

The AB layer or cap 22 may have any desired thickness, a non-limiting example of which includes about 4 to about 12 inches. The AG layer 24 or drainage blanket may have any desired thickness, a non-limiting example of which includes about 1 inch or more. Of course, the aforementioned thicknesses may be optimized to a particular project having site-specific issues, demands and conditions.

An important feature of the AG layer 24, 88 is that it must be more permeable than both the underlying sediment 16 and the overlying AB and BB layer 22, 90 so that the AG layer creates a long preferential flow path 25 and/or provides sufficient contact and residence times to enable reactions (e.g., sorption, complexation, destruction, and/or precipitation) to occur to facilitate the capture and removal of contaminants from pore fluids (e.g., groundwater and/or gas).

As the contaminated pore fluid preferentially flows into and through the AG layer 24, 88, the contaminated pore fluid is actively treated until it daylights at the leftmost extent of the AG layer 24 and enters into the overlying water column 10 or surface water. The exposed section of the AG layer also facilitates the dissipation of positive pore water pressure associated with upwelling pore fluid.

Active/reactive sediment capping systems have been described above in connection with Figure 1. In particular, the reactive capping systems of AquaBlok, Ltd. utilize a composite particle comprising a core or aggregate material in combination with various amendments such as sorbents. In accordance with the present invention, the reactive layer, portion or material within such systems may employ a self-regenerating reactive material as described below.

As described herein, combinations of materials may be used in forming either of the two major layers of a capping system. For example, the BB layer of the BB/AG system is itself a blend of AB composite particles with aggregate. Other materials such as slag, clays, sand, mortars, binders, etc. might be used in combination with AB particles for the impermeable layer, which should have a hydraulic conductivity of 1×10⁻⁶ cm/sec or less, including 1×10⁻⁷ cm/sec or less, 1×10⁻⁸ cm/sec or less, and 1×10⁻⁹ cm/sec or less. Similarly, the permeable layer may itself be a combination of materials, such as composite particles in combination with aggregate, slag, sand and/or other drainage blankets or systems. The permeable layer should have a hydraulic conductivity of from about 1×10⁻¹ cm/sec to about 1×10⁻⁶ cm/sec, including from 1×10⁻¹ to 1×10⁻⁵ cm/sec, from 1×10⁻¹ to 1×10⁻⁴ cm/sec, from 1×10⁻² to 1×10⁻⁶ cm/sec, from 1×10⁻² to 1×10⁻⁵ cm/sec, and from 1×10⁻² to 1×10⁻⁴ cm/sec. The combination of different materials in the permeable layer can add variations that impact the degree of permeability as well as the distribution of any active reagents that might be warranted in a particular "active/reactive" capping installation.

## Claims

1. A system of composite particles for remediation of a selected contaminant area, the system comprising two or more types of composite particles, each particle having a core and a coating, **characterized in that**:
the coating of a first-type particle contains a reactive material comprising at least one reactive composition for fixing, complexing, adsorbing or absorbing a contaminant; and
the coating of a second-type particle contains in a statin composition at least one statin compound capable of inhibiting the growth of methanogenic Archaea, wherein the statin composition includes a red yeast rice extract or a monacolin.

2. The system of claim 1 wherein the particles of a first-type are engineered to have a different density or particle size so as to settle at a different rate from the particles of the second-type.

3. The system of claim 1, wherein the monacolin is monacolin K.

4. The system of claim 1 wherein the reactive material comprises at least one sorptive composition selected from clay, organoclay, and activated carbon.

5. A method of remediating a selected contaminant area to reduce methane production, the method comprising:
depositing over said selected contaminant area one or more layers of composite particles, at least one layer of which comprises a system of composite particles according to claim 1 to form an amended treatment layer that inhibits methane production.

6. The method according to claim 5, further comprising deploying additional composite particles having a core and a swellable coating to form a barrier or sequestration layer over the amended treatment layer.

7. A method according to claim 5 or 6, further comprising:
depositing a layer of second-type composite particles to form an amended treatment layer that inhibits methane production; and
depositing a layer of first-type composite particles on the amended treatment layer to form a reactive sorptive layer over the amended treatment layer.

8. A method of using a composite particle system of claim 1, the method comprising deploying the two particle types in a water column over a contaminated area, wherein the particles settle to the bottom and swell to form a reactive layer of a sediment capping system containing a statin composition for inhibiting the growth of methanogenic Archaea.

9. The method of claim 5 to claim 7 wherein the particles of one type are engineered to have a different density or particle size so as to settle at a different rate from the particles of a second type.

10. A method of reducing methanogenesis by Archaea microorganisms present in an area to be remediated, the method comprising:
deploying over the area to be remediated a remedial layer of one or more types of composite particles, each composite particle having a core and a coating, the coatings of all types of composite particles collectively containing a reactive material comprising at least one reactive composition for fixing, complexing, adsorbing or absorbing a contaminant; and a statin composition comprising at least one statin compound capable of inhibiting the growth of methanogenic Archaea, wherein the statin composition includes at least one of a red yeast rice extract and a monacolin;
deploying over the reactive layer additional composite particles having a core and a swellable coating; and
hydrating the additional composite particles to form a barrier or sequestration layer over the remedial layer.

11. The method according to claim 10, wherein the monacolin is monacolin K.

12. The method according to claim 10, wherein the statin composition inhibits a biosynthetic enzyme selected from:
4-([β-D-ribofuranosyl)aminobenzene-5'-phosphate (β-RFA-P) synthase;
3-hydroxy-3-ethylglutaryl coenzyme A (HMG-CoA) reductase; and
Coenzyme M.

13. A method according to claim 10, further comprising:
depositing a layer of second-type composite particles to form an amended treatment layer that inhibits methane production; and
depositing a layer of first-type composite particles on the amended treatment layer to form a reactive sorptive layer over the amended treatment layer.

## Patentansprüche

1. System aus Verbundteilchen zur Sanierung eines ausgewählten kontaminierten Bereichs, wobei das System zwei oder mehr Arten von Verbundteilchen umfasst, wobei jedes Teilchen einen Kern und eine Beschichtung aufweist, **dadurch gekennzeichnet, dass**:
die Beschichtung eines Teilchens des ersten Typs ein reaktives Material enthält, das mindestens eine reaktive Zusammensetzung zum Fixieren, Komplexieren, Adsorbieren oder Absorbieren einer Kontamination umfasst; und
die Beschichtung eines Teilchens des zweiten Typs in einer Statinzusammensetzung mindestens eine Statinverbindung enthält, die in der Lage ist, das Wachstum von methanogenen Archaea zu hemmen, wobei die Statinzusammensetzung einen roten Hefereis-Extrakt oder ein Monacolin beinhaltet.

2. System nach Anspruch 1, wobei die Teilchen eines ersten Typs so entwickelt werden, dass sie eine andere Dichte oder Teilchengröße aufweisen, sodass sie sich mit einer anderen Geschwindigkeit absetzen als die Teilchen des zweiten Typs.

3. System nach Anspruch 1, wobei das Monacolin Monacolin K ist.

4. System nach Anspruch 1, wobei das reaktive Material mindestens eine Sorptionszusammensetzung umfasst, ausgewählt aus Ton, Organoton und Aktivkohle.

5. Verfahren zum Sanieren eines ausgewählten kontaminierten Bereichs, um die Methanproduktion zu reduzieren, wobei das Verfahren Folgendes umfasst:
Ablagern einer oder mehrerer Schichten von Verbundteilchen, von denen mindestens eine Schicht ein System von Verbundteilchen nach Anspruch 1 umfasst, über dem ausgewählten kontaminierten Bereich, um eine veränderte Behandlungsschicht zu bilden, die die Methanproduktion hemmt.

6. Verfahren nach Anspruch 5, ferner umfassend Einsetzen zusätzlicher Verbundteilchen mit einem Kern und einer quellfähigen Beschichtung, um eine Sperr- oder Sequestrierungsschicht über der geänderten Behandlungsschicht zu bilden.

7. Verfahren nach Anspruch 5 oder 6, ferner umfassend:
Ablagern einer Schicht aus Verbundteilchen des zweiten Typs, um eine geänderte Behandlungsschicht zu bilden, die die Methanproduktion hemmt; und
Ablagern einer Schicht aus Verbundteilchen des ersten Typs auf der geänderten Behandlungsschicht, um eine reaktive Sorptionsschicht über der geänderten Behandlungsschicht zu bilden.

8. Verfahren zum Verwenden eines Verbundteilchensystems nach Anspruch 1, wobei das Verfahren das Einsetzen der beiden Teilchentypen in einer Wassersäule über einem kontaminierten Bereich umfasst, wobei sich die Teilchen am Boden absetzen und aufquellen, um eine reaktive Schicht eines Sedimentkappensystems zu bilden, das eine Statinzusammensetzung zum Hemmen des Wachstums von methanogenen Archaea enthält.

9. Verfahren nach Anspruch 5 bis 7, wobei die Teilchen eines Typs so entwickelt werden, dass sie eine andere Dichte oder Teilchengröße aufweisen, sodass sie sich mit einer anderen Geschwindigkeit absetzen als die Teilchen eines zweiten Typs.

10. Verfahren zum Reduzieren der Methanogenese durch Archaea-Mikroorganismen, die in einem zu sanierenden Bereich vorhanden sind, wobei das Verfahren umfasst:
Einsetzen einer Sanierungsschicht aus einer oder mehreren Typen von Verbundteilchen über dem zu sanierenden Bereich, wobei jedes Verbundteilchen einen Kern und eine Beschichtung aufweist, wobei die Beschichtungen aller Typen von Verbundteilchen gemeinsam ein reaktives Material enthalten, das mindestens eine reaktive Zusammensetzung zum Fixieren, Komplexieren, Adsorbieren oder Absorbieren einer Kontamination umfasst; und eine Statinzusammensetzung, die mindestens eine Statinverbindung umfasst, die in der Lage ist, das Wachstum von methanogenen Archaea zu hemmen, wobei die Statinzusammensetzung mindestens einen von einem roten Hefereis-Extrakt und einem Monacolin enthält;
Einsetzen zusätzlicher Verbundteilchen, die einen Kern und eine quellfähige Beschichtung aufweisen, über der reaktiven Schicht; und
Hydratisieren der zusätzlichen Verbundteilchen, um eine Sperr- oder Sequestrierungsschicht über der Sanierungsschicht zu bilden.

11. Verfahren nach Anspruch 10, wobei das Monacolin Monacolin K ist.

12. Verfahren nach Anspruch 10, wobei die Statinzusammensetzung ein biosynthetisches Enzym hemmt, ausgewählt aus:
4-(β-D-Ribofuranosyl)Aminobenzol-5'-phosphat (β-RFA-P)-Synthase;
3-Hydroxy-3-ethylglutaryl-Coenzym A (HMG-CoA)-Reduktase; und Coenzym M.

13. Verfahren nach Anspruch 10, ferner umfassend:
Ablagern einer Schicht aus Verbundteilchen des zweiten Typs, um eine geänderte Behandlungsschicht zu bilden, die die Methanproduktion hemmt; und
Ablagern einer Schicht aus Verbundteilchen des ersten Typs auf der geänderten Behandlungsschicht, um eine reaktive Sorptionsschicht über der geänderten Behandlungsschicht zu bilden.

## Revendications

1. Système de particules composites pour l'assainissement d'une zone de contaminants sélectionnée, le système comprenant deux types de particules composites ou plus, chaque particule ayant un noyau et un revêtement, **caractérisé en ce que** :
le revêtement d'une particule de premier type contient un matériau réactif comprenant au moins une composition réactive pour fixer, complexer, adsorber ou absorber un contaminant ; et
le revêtement d'une particule de second type contient, dans une composition de statine, au moins un composé de statine capable d'inhiber la croissance d'archées méthanogènes, dans lequel la composition de statine comporte un extrait de levure de riz rouge ou une monacoline.

2. Système selon la revendication 1, dans lequel les particules d'un premier type sont conçues pour avoir une masse volumique ou une taille de particules différente de manière à se déposer à une vitesse différente de celle des particules du second type.

3. Système selon la revendication 1, dans lequel la monacoline est la monacoline K.

4. Système selon la revendication 1, dans lequel le matériau réactif comprend au moins une composition de sorption sélectionnée parmi l'argile, l'argile organique et le charbon actif.

5. Procédé d'assainissement d'une zone de contaminants sélectionnée pour réduire la production de méthane, le procédé comprenant :
le dépôt, sur ladite zone de contaminants sélectionnée, d'une ou plusieurs couches de particules composites, dont au moins une couche comprend un système de particules composites selon la revendication 1 pour former une couche de traitement modifiée qui inhibe la production de méthane.

6. Procédé selon la revendication 5, comprenant en outre le déploiement de particules composites supplémentaires ayant un noyau et un revêtement gonflable pour former une couche de barrière ou de séquestration sur la couche de traitement modifiée.

7. Procédé selon la revendication 5 ou 6, comprenant en outre :
le dépôt d'une couche de particules composites de second type pour former une couche de traitement modifiée qui inhibe la production de méthane ; et
le dépôt d'une couche de particules composites de premier type sur la couche de traitement modifiée pour former une couche de sorption réactive sur la couche de traitement modifiée.

8. Procédé d'utilisation d'un système de particules composites selon la revendication 1, le procédé comprenant le déploiement des deux types de particules dans une colonne d'eau au-dessus d'une zone contaminée, dans lequel les particules se déposent au fond et gonflent pour former une couche réactive d'un système de recouvrement des sédiments contenant une composition de statine pour inhiber la croissance des archées méthanogènes.

9. Procédé selon la revendication 5 à la revendication 7, dans lequel les particules d'un type sont conçues pour avoir une masse volumique ou une taille de particules différente de manière à se déposer à une vitesse différente de celle des particules d'un second type.

10. Procédé de réduction de la méthanogénèse par des microorganismes de type archées présents dans une zone à assainir, le procédé comprenant :
le déploiement, sur la zone à assainir, d'une couche d'assainissement d'un ou plusieurs types de particules composites, chaque particule composite ayant un noyau et un revêtement, les revêtements de tous types de particules composites contenant collectivement un matériau réactif comprenant au moins une composition réactive pour fixer, complexer, adsorber ou absorber un contaminant ; et une composition de statine comprenant au moins un composé de statine capable d'inhiber la croissance d'archées méthanogènes, dans lequel la composition de statine comporte au moins l'un parmi un extrait de levure de riz rouge et une monacoline ;
le déploiement, sur la couche réactive, de particules composites supplémentaires ayant un noyau et un revêtement gonflable ; et
l'hydratation des particules composites supplémentaires pour former une couche de barrière ou de séquestration sur la couche d'assainissement.

11. Procédé selon la revendication 10, dans lequel la monacoline est la monacoline K.

12. Procédé selon la revendication 10, dans lequel la composition de statine inhibe une enzyme biosynthétique sélectionnée parmi :
la 4-(β-D-ribofuranosyl)aminobenzène-5'-phosphate (β-RFA-P) synthase ;
la 3-hydroxy-3-éthylglutaryl coenzyme A (HMG-CoA) réductase ; et
la Coenzyme M.

13. Procédé selon la revendication 10, comprenant en outre :
le dépôt d'une couche de particules composites de second type pour former une couche de traitement modifiée qui inhibe la production de méthane ; et
le dépôt d'une couche de particules composites de premier type sur la couche de traitement modifiée pour former une couche de sorption réactive sur la couche de traitement modifiée.
